# EUROPÄISCHE PATENTSCHRIFT

(11) **EP 2 018 743 B1**
(45) Veröffentlichungstag und Bekanntmachung des Hinweises auf die Patenterteilung: **07.07.2010**
(21) Anmeldenummer: 07728805.8
(22) Anmeldetag: 04.05.2007
(51) Int. Cl.: H04L 12/56

(54) **ENERGIE-EFFIZIENTE DATENÜBERTRAGUNG IN EINEM FUNKNETZWERK**
ENERGY EFFICIENT DATA TRANSMISSION IN A RADIO NETWORK
TRANSMISSION ÉNERGÉTIQUEMENT EFFICACE DE DONNÉES DANS UN RÉSEAU RADIO

(30) Priorität: 05.05.2006 DE 102006021100
(43) Veröffentlichungstag der Anmeldung: 28.01.2009
(73) Patentinhaber: Palm, Inc., Sunnyvale, CA 94085-2801 (US)
(72) Erfinder: OBERMANNS, Sebastian, 46395 Bocholt (DE)
(74) Vertreter: Samson & Partner
(86) Internationale Anmeldenummer: PCT/EP2007/054352
(87) Internationale Veröffentlichungsnummer: WO 2007/128793

(56) Entgegenhaltungen:
- EP-A- 1 530 319
- EP-A- 1 530 384
- US-A1- 2006 002 421
- IEEE 802.16 BROADBAND WIRELESS ACCESS WORKING GROUP: "Changes on Downlink and Uplink Resource Allocation in OFDMA-PHY" IEEE C802.16E-04/07R1, 15. Januar 2004 (2004-01-15), XP002449120
- 3GPP: "3rd Generation Partnership Project; Physical Layer Aspects for Evolved UTRA (Release 7)" 3GPP TR 25.814 V1.1.1, [Online] Februar 2006 (2006-02), XP002387572 Gefunden im Internet: URL:http://www.3gpp.org/ftp/Specs/html-inf o/25814.htm> [gefunden am 2006-06-27]

## Beschreibung

Die Erfindung betrifft ein Verfahren zum Übertragen von Daten in einem Übertragungsintervall mit mehreren Zeitschlitzen und mit mehreren Übertragungskanälen an einen Empfänger eines Funknetzwerkes mit einem Sender und wenigstens einem weiteren Empfänger.

Die Erfindung betrifft außerdem ein Funknetzwerk und einen Empfänger, die zur Durchführung des Verfahrens eingerichtet sind.

Verfahren zum Übertragen von Daten in einem Funknetzwerk mit einem Sender und einer Vielzahl von Empfängern sind vielfach bekannt. Beispielsweise verwenden digitale Mobiltelefonfunknetzwerke Frequenzmultiplexverfahren (FDMA), Zeitmultiplexverfahren (TDMA) und Codemultiplexverfahren (CDMA) zur Übertragung von Daten an eine Vielzahl von Empfängern einer Funkzelle über eine gemeinsame Luftschnittstelle.

Weiterer Übertragungsverfahren sehen ein Multiplexen sowohl in der Zeit- als auch in der Frequenzdomain vor, beispielsweise eine Datenübertragung nach dem Enhanced Data Rates for GSM Evolution (EDGE) Standard oder bei dem so genannten Orthogonal Frequency Division Multiplexing (OFDM). Um bei OFDM-Systemen eine möglichst hohe Datenübertragungsrate und einen effizienten Umfang mit der zur Verfügung stehenden Bandbreite zu erreichen, werden die Übertragungseigenschaften einzelner, zueinander orthogonaler Kanäle zwischen einer Basisstation und einer Vielzahl von mobilen Stationen berücksichtigt und die Datenübertragung fortwährend an diese angepasst. Auf diese Weise werden für jeden Empfänger nur solche Kanäle verwendet, auf denen gute Empfangseigenschaften bestehen. Dieses Prinzip ist auch unter dem Namen "Multi User Diversity" (MUD) bekannt.

Nachteilig an den bekannten Verfahren ist, dass die Planung der Verwendung von zur Verfügung stehenden Übertragungskanälen verhältnismäßig aufwendig ist und Empfänger ständig eine Vielzahl von Übertragungskanälen auf an sie gerichtete Daten überwachen müssen, was zu einem hohen Energiebedarf auf Seiten der Empfänger führt.

Der Artikel "Changes on Downlink and Uplink Resource Allocation on OFDMA-PHY", IEEE C802.16E-04/07R1, 15.Januar 2004 beschreibt ein OFDM-Übertragungsverfahren, bei dem die Datenpakete in der Reihenfolge der Robustheit ihrer Burstprofile übertragen werden.

Aus 3GPP TR 25.814 V1.1.1, Februar 2006 ist ein OFDM-System bekannt, in welchem Messungen der Kanalqualität durch die Mobilstationen durchgeführt und an de Basisstation zurückgemeldet werden.

Aufgabe der Erfindung ist es daher, ein Verfahren zum Übertragen von Daten in einem Funknetzwerk der oben genannten Art zu beschreiben, das flexibel ist und einen effizienten Einsatz der zur Verfügung gestellten Ressourcen erlaubt. Des Weiteren sollen ein Funknetzwerk und ein Empfänger beschrieben werden, die zur Durchführung eines solchen Verfahrens geeignet sind.

Erfindungsgemäß wird die Aufgabe durch ein Verfahren der oben genannten Art mit den folgenden Schritten gelöst:
- Senden wenigstens eines Datenpaketes mit einer eingebetteten Kennung auf wenigstens einem Übertragungskanal in einem Zeitschlitz des Übertragungsintervalls durch den Sender,
- Überwachen des wenigstens eines Übertragungskanals durch den Empfänger auf in dem Zeitschlitz übertragene Datenpakete mit darin eingebetteten, dem Empfänger zugeordneten Kennungen und
- Schalten des Empfängers in einen Ruhezustand bis zum Ende des Übertragungsintervalls, wenn der Empfänger während des Zeitschlitzes kein Datenpaket mit einer darin eingebetteten, dem Empfänger zugeordneten Kennung erhalten hat.

Durch das Überwachen wenigstens eines Übertragungskanals in dem Zeitschlitz auf eine an einen Empfänger gerichtete Datenpakete können die Empfänger, die in dem Zeitschlitz keine Daten erhalten haben, für weitere Zeitschlitze des Übertragungsintervalls in einen Ruhezustand geschaltet werden. Des Weiteren wird durch das Einbetten einer einem Empfänger zugeordneten Kennung eine so genannte In-Band Signalisierung ermöglicht, so dass auf die Verwendung eines dedizierten Steuerkanals verzichtet werden kann.

In einer vorteilhaften Ausgestaltung der Erfindung werden die Schritte des Verfahrens für jeden nachfolgenden Zeitschlitz des Übertragungsintervalls wiederholt, solange der Empfänger in einem vorherigen Zeitschlitz ein Datenpaket mit einer darin eingebetteten, dem Empfänger zugeordneten Kennungen erhalten hat. Auf diese Weise kann der Empfänger in den Ruhezustand geschaltet werden, sobald keine Datenübertragung an ihn mehr stattfindet.

In einer weiteren vorteilhaften Ausgestaltung der Erfindung werden in einem zusätzlichen Schritt Kanaleigenschaften des wenigstens eines Übertragungskanals in einer Messphase ermittelt. Durch das Ermitteln von Kanaleigenschaften kann eine Datenübertragung an die Empfänger des Funknetzwerkes unter Berücksichtigung der Übertragungseigenschaften geplant oder an diese angepasst werden.

In einer weiteren vorteilhaften Ausgestaltung der Erfindung werden vorbestimmte Anforderungen für Datenraten, Echtzeitbedingungen oder Verbindungsqualitäten bei der Ermittlung eines Übertragungsplanes für das Übertragungsintervall berücksichtigt, so dass verbindungsspezifische Qualitätsanforderungen eingehalten werden können.

Weitere Ausgestaltungen der Erfindung sind in den Unteransprüchen angegeben. Die Erfindung wird nachfolgend an einem Ausführungsbeispiel anhand der Zeichnungen näher erläutert. In den Zeichnungen zeigen:
- Figur 1: ein Funknetzwerk gemäß einer Ausgestaltung der Er- findung,
- Figur 2: eine schematische Darstellung eines Übertragungs- plans,
- Figur 3: ein Flussdiagram eines Verfahrens zum Übertragen von Daten.

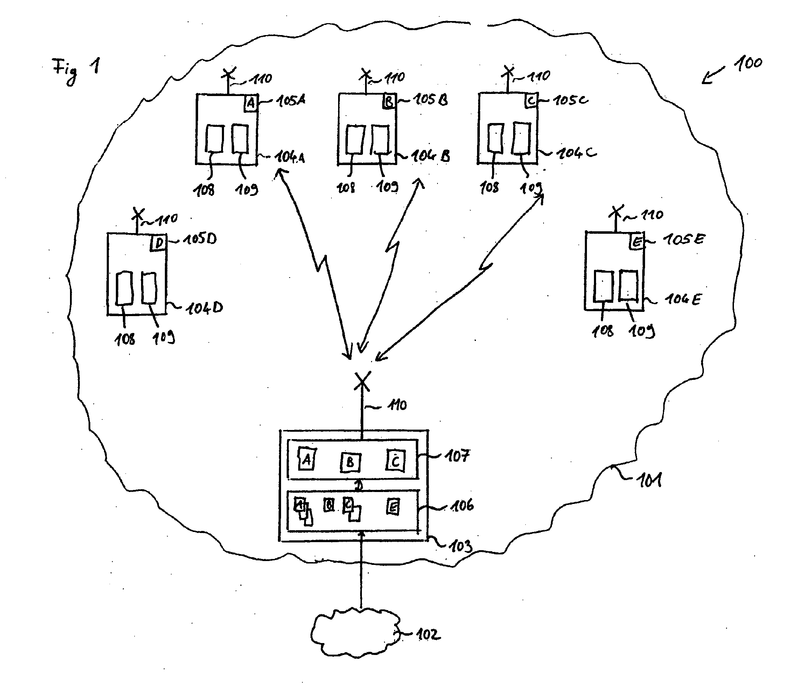

Figur 1 zeigt ein Funknetzwerk 100 mit einer Funkzelle 101 die mit einem Kernnetzwerk 102 verbunden ist. In der Funkzelle 101 befinden sich eine Basisstation 103 und fünf mobile Stationen 104A bis 104E. Jede der mobilen Stationen 104 besitzt jeweils eine eindeutige Kennung 105A bis 105E.

Die Basisstation 103 weist eine Verbindungseinheit 106, einen Übertragungsplaner 107 und eine Sende- und Empfangsantenne 110 auf. Durch die Verbindungseinheit 106 werden Datenverbindungen zwischen dem Kernnetzwerk 102 und den mobilen Stationen 104 ausgebaut und zu diesen Verbindungen gehörende Datenpakete gegebenenfalls zwischengespeichert.

Der Übertragungsplaner 107 erstellt anhand zur Verfügung stehender Verbindungsdaten, wie etwa eine erforderlichen Datenrate einer bereits aufgebauten Verbindung und der Menge in der Verbindungseinheit 106 für jede der mobilen Stationen 104 zwischengespeicherten Daten, einen Übertragungsplan zur Übertragung von Daten aus der Verbindungseinheit 106 an eine oder eine Gruppe von mobilen Stationen 104. Bei dem Übertragungsplaner 107 kann es sich um eine Hardwarekomponente oder eine Computerprogramm handeln, dass auf einem Prozessor der Basisstation 103 oder einem damit verbundenen Rechner ausgeführt wird. Auch eine Kombination von Hard- und Softwarekomponenten ist möglich.

Bei der Erstellung des Übertragungsplans berücksichtigt der Übertragungsplaner 107 auch die jeweilige Kanalqualität für jeden zur Verfügung stehenden Übertragungskanal in jedem geplanten Zeitschlitz des Übertragungsintervalls. Informationen hierzu werden aus statischen Daten ermittelt, insbesondere von den mobilen Stationen 104 zurück übermittelten Kanalqualitätsinformationen, Bitfehlerraten oder Rauschabständen.

Jede der mobilen Stationen 104 weist einen Empfangsteil 108 und einen Sendeteil 109 auf. Beide sind mit einer kombinierten Sende- und Empfangsantenne 110 verbunden. Der Empfangsteil 108 ist dazu eingerichtet, eine Vielzahl von Kanälen der Funkzelle 101 zu überwachen, um Datenpakete mit der eindeutigen Kennung 105 der jeweiligen mobilen Station 104 zu erkennen und heraus zu filtern. Dabei kann die eindeutige Kennung 105 oder ein davon unabhängiger Schlüssel auch zur Entschlüsselung von verschlüsselt über das Funknetzwerk 100 übertragenden Daten verwendet werden, so dass jede mobile Station 104 nur an sie gerichtete Datenpakete entschlüsseln kann.

Bei dem Funknetzwerk 100 handelt es sich im Ausführungsbeispiel um ein so genanntes OFDM-Funknetzwerk. Beispielsweise handelt es sich bei der Basisstation 103 und den mobilen Stationen 104 um eine Basisstation einer Mobiltelefonfunkzelle und Mobiltelefone innerhalb der Zelle. Selbstverständlich kann es sich auch um andere Sender und Empfänger eines Funknetzwerkes 100 handeln, beispielsweise um Geräte in einem so genannten Wireless LAN (WLAN) Datennetzwerk. Kennzeichnend für jedes dieser Funknetzwerke 100 ist es, dass eine Vielzahl von Übertragungskanälen und Zeitschlitzen zur Verfügung stehen, so dass die Datenübertragung sowohl in der Zeitdomain als auch in der Frequenzdomain gemultiplext werden kann, das heißt, dass sowohl unterschiedliche Übertragungskanäle als auch unterschiedliche Zeitschlitze einzelnen mobilen Stationen 104 zugewiesen werden können.

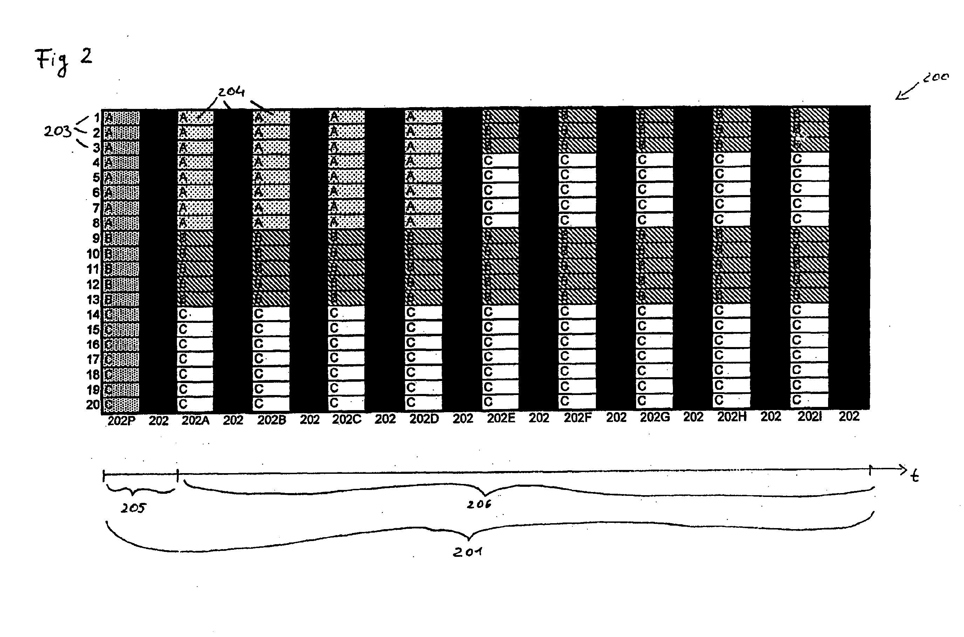

Figur 2 zeigt einen beispielhaften Übertragungsplan 200 für ein Übertragungsintervall 201. Das Übertragungsintervall 201 ist in zwanzig Zeitschlitze 202, auch als "Frames" bezeichnet, eingeteilt. Zeitschlitze 202 mit ungerader Ordnung dienen zur Datenübertragung von der Basisstation 103 zu den mobilen Stationen 104 und sind mit 202P und 202A bis 202I bezeichnet. Zeitschlitze 202 mit geraden Ordnungszahlen dienen zur Datenübertragung von den mobilen Stationen 104 zurück zur Basisstation 103 und sind in der Figur 2 schattiert dargestellt.

Im Ausführungsbeispiel ist das Übertragungsintervall 201 zusätzlich in eine optionale Messphase 205 und eine Datenübertragungsphase 206 unterteilt. Die Messphase 205 umfasst einen Zeitschlitz 202P in Downlink-Richtung und einen weiteren Zeitschlitz 202 in Uplink-Richtung und wird zur Ermittlung von Kanaleigenschaften verwendet. Die Datenübertragungsphase 206 umfasst die verbleibenden 18 Zeitschlitze 202 und dient der Übertragung von Nutzdaten.

Für die Datenübertragungsphase 206 gelten dabei folgende Randbedingungen:
- Ein Empfänger, beispielsweise eine mobile Station 104, der in einem aktuellen Zeitschlitz 202 keine Daten von einem Sender, beispielsweise der Basisstation 103, erhalten hat, wird auch in keinem der nachfolgenden Zeitschlitze 202 Daten erhalten und kann daher für diese Dauer in einen Ruhezustand geschaltet werden.
- Ein Empfänger, dessen Datenempfang in dem aktuellen Zeitschlitz 202 abbricht, wird in keinem der nachfolgenden Zeitschlitze 202 berücksichtigt und kann daher ebenfalls für die Dauer des Übertragungsintervalls 201 in einen Ruhezustand geschaltet werden.
- Jeder Empfänger kann in jedem nachfolgenden Zeitschlitz 202 mehr oder weniger Übertragungskanäle 203 zugewiesen bekommen.

Für die weitere Beschreibung wird nur die Datenübertragung von der Basisstation 103 zu den mobilen Stationen 104 näher beschrieben. Selbstverständlich ist eine Anwendung des Verfahrens gemäß der vorliegenden Erfindung auch für die Rückübertragung von den mobilen Stationen 104 zu der Basisstation 103 anwendbar.

Jeder Zeitschlitz 202 ist zusätzlich in eine Vielzahl von Übertragungskanälen 203 aufgeteilt. Im Ausführungsbeispiel stehen 20 Übertragungskanäle 203 zur Datenübertragung zur Verfügung. Bei den Übertragungskanälen 203 handelt es sich beispielsweise um unterschiedliche Frequenzbereiche eines Übertragungsbandes.

Während der Messphase 205, im dargestellten Übertragungsplan 200 entsprechend dem ersten Zeitschlitz 202P, werden Informationen an sämtliche mobilen Stationen 104A bis 104E übertragen. Beispielsweise kann ein vorbestimmtes Messsignal von der Basisstation 103 an die mobilen Stationen 104 übertragen werden. Alternativ können auch Steuerinformationen oder sonstige Daten an die mobilen Stationen 104A bis 104E übertragen werden.

Während dieser Messphase überwachen sämtliche mobilen Stationen 104A bis 104E, die sich in einer Funkzelle 101 befinden und damit der Basisstation 103 zugeordnet sind, die Übertragungskanäle 203 auf Informationen, insbesondere das Messsignal. Zur Ermittlung von Kanaleigenschaften kann beispielsweise eine Empfangsleistung des empfangenen Messsignals, ein Rauschabstand oder eine spezifische Bitfehlerrate dienen. Im nachfolgenden Zeitschlitz 202 werden diese oder daraus abgeleitete Werte, die eine Bestimmung der Kanalqualität zulassen, von den mobilen Stationen 104A bis 104E zurück zur Basisstation 103 übermittelt.

Alternativ zu einer gesonderten Messphase 205 können auch andere Mittel zur Ermittlung von Kanaleigenschaften Verwendung finden. Beispielsweise können in einem vorherigen Übertragungsintervall 201 bzw. einer Datenübertragungsphase 205 ermittelte Bitfehlerraten zur Einschätzung der Kanalqualität und somit zur Planung der Datenübertragung in dem aktuellen Übertragungsintervall 201 dienen. Um eine besonders gute Einschätzung zu ermöglichen, sollte die Messphase 205 zeitlich möglichst dicht an der Datenübertragungsphase 206 liegen.

Der Übertragungsplaner 107 der Basisstation 103 erstellt anhand der ermittelten Kanaleigenschaften den Übertragungsplan 200 für die Datenübertragungsphase 206, der in der Figur 2 dargestellt ist. Dementsprechend werden die drei mobile Stationen 104A bis 104C von der Basisstation 103 bedient. Mögliche weitere Empfänger, beispielsweise weitere mobile Stationen 104D und 104E werden während der Datenübertragungsphase 206, für das der Übertragungsplan 200 ermittelt wurde, nicht berücksichtigt.

Dies kann zum einen daran liegen, dass nicht genug Übertragungskapazität zur Bedienung sämtlicher mobiler Stationen 104 zur Verfügung steht, in der Verbindungseinheit 106 keine Daten zur Übermittlung an eine mobile Station 104D zur Verfügung stehen oder eine fehlerfreie Kommunikation aufgrund von Interferenz zwischen der Basisstation 103 und einer mobilen Station 104E unmöglich ist.

In all diesen Fällen können die mobilen Stationen 104D und 104E zumindest Teile ihrer Empfangsteile 108, insbesondere zur Entschlüsselung und Weiterverarbeitung empfangener Datenpakete 204 genutzte Signalprozessoren ausschalten beziehungsweise in einen Ruhezustand schalten, um die Leistungsaufnahme zu verringern. Auf diese Weise werden verlängerte Laufzeiten der mobilen Stationen 104D und 104E bei gleich bleibender Batteriekapazität ermöglicht. Alternativ zu einer Energieeinsparung kann der Ruhezustand auch dazu dienen, andere Funktionen der mobilen Station 104D beziehungsweise 104E zu beschleunigen, etwa in dem mehr Prozessorzeit für andere Aufgaben bereitgestellt wird.

Trotz dieser Beschränkungen und Vereinfachung auf Seiten der mobilen Stationen 104 kann der Übertragungsplan 200 für die Datenübertragungsphase 206 von der Basisstation 103 und dessen Übertragungsplaner 107 flexibel gestaltet werden, so dass beispielsweise unterschiedliche Datenübertragungsraten innerhalb der Datenübertragungsphase 206 ermöglicht werden, wie dies in der Figur 2 dargestellt ist.

Im dargestellten Beispiel empfängt die erste mobile Station 104A zunächst auf acht Übertragungskanälen 203 gleichzeitig Daten. Diese verhältnismäßig breitbandige Datenübertragung findet jedoch nur für die Dauer von vier Zeitschlitzen 202A bis 202D statt. Danach werden keine weiteren Datenpakete 204 an die mobile Station 104A übertragen. Während der Zeitschlitze 202A bis 202D werden gleichzeitig auf fünf beziehungsweise sieben Übertragungskanälen 203 Daten an die mobile Station 104B beziehungsweise die mobile Station 104C übertragen.

Ab dem Zeitschlitz 202E werden ausschließlich Daten an die mobilen Stationen 104B und 104C übertragen, so dass für die Datenübertragung ab diesem Zeitschlitz 202E acht beziehungsweise zwölf Übertragungskanäle 203 zur Verfügung stehen. Weil die mobile Station 104A in dem Übertragungsintervall 202E keine weiteren Daten von der Basisstation 103 empfängt, kann auch sie bis zum Ende des Übertragungsintervalls 201 in einen Ruhezustand geschaltet werden.

Auf diese Weise können Datenübertragungsraten zwischen der Basisstation 103 und den unterschiedlichen mobilen Stationen 104A, 104B und 104C an aktueller Erfordernisse und Kanalqualitäten angepasst werden. Ist beispielsweise eine Datenübertragung zwischen der Basisstation 103 und der mobilen Station 104A nur in den ersten Zeitschlitzen 202A bis 202D möglich, weil danach Interferenz eine Datenübertragung stört, können Daten zunächst relativ breitbandig übertragen werden, so dass die mobile Station 104A während der nachfolgenden Funkpause noch eventuell zwischengespeicherte Daten zur weiteren Verarbeitung zur Verfügung stehen. Umgekehrt werden Datenübertragungen zu den mobilen Stationen 104B und 104C zunächst beschränkt, um eine breitbandige Datenübertragung zu der mobilen Station 104A zu ermöglichen und nachher erweitert um gegebenenfalls in der Verbindungseinheit 106 zwischenzeitlich zwischengespeicherte Daten an die mobile Station 104B und 104C während der Zeitschlitze 202E bis 202I zu übertragen.

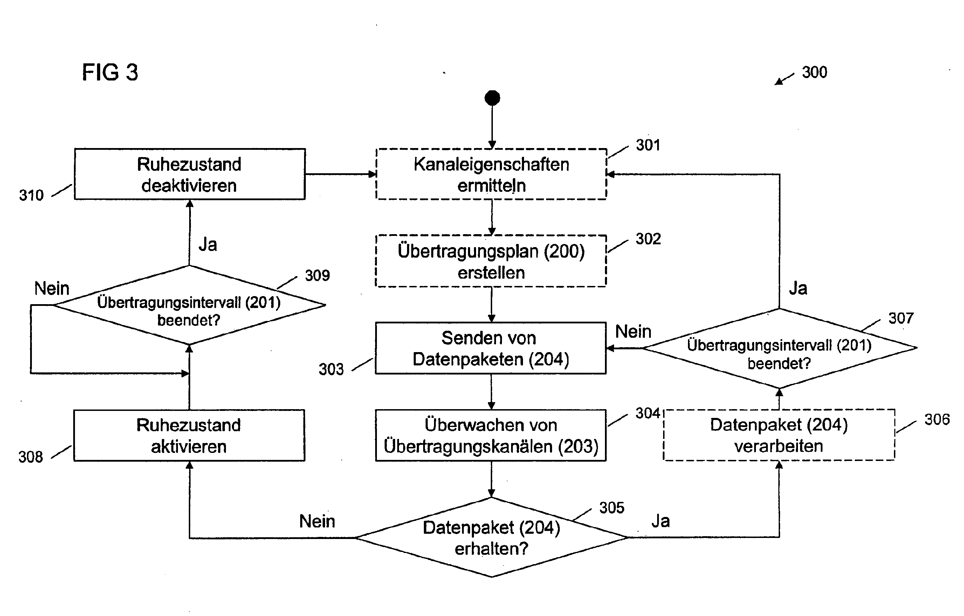

Figur 3 zeigt ein Flussdiagramm eines Verfahrens 300 zum Übertragen von Daten von einem Sender, beispielsweise der Basisstation 103, an einem Empfänger, beispielsweise die mobile Station 104A, eines Funknetzwerks 100.

Zunächst werden in einem optionalen Schritt 301 die Kanaleigenschaften des Funknetzwerks 101 ermittelt. Beispielsweise können diese während einer Messphase 205 durch Übermitteln eines Messsignals an alle mobilen Stationen 204 des Funknetzwerkes und nachfolgenden Rückübermittlung von durch die mobilen Stationen 104 gemessenen Empfangsleistungen ermittelt werden. Alternativ können die Kanaleigenschaften aber auch aus Fehlerraten vorhergehender Übertragungsintervalle 201 geschätzt werden.

In einem weiteren optionalen Schritt 302 erstellt die Basisstation 103 einen Übertragungsplan 200 für das aktuelle Übertragungsintervall 201 oder dessen Datenübertragungsphase 206. Darin können insbesondere besondere Anforderungen der mobilen Stationen 104 bezüglich benötigter Datenraten, Echtzeitbedingungen oder Verbindungsqualitäten berücksichtigt werden.

Alternativ kann eine Planung für das komplette Übertragungsintervall 201 jedoch auch entfallen. Beispielsweise ist es auch möglich, nur für einen einzelnen oder wenige Zeitschlitze 202 des Übertragungsintervalls 201 vorauszuplanen, in etwa in Abhängigkeit von in der Verbindungseinheit 106 gepufferten Daten.

In einem weiteren Schritt 303 werden Datenpakete 204 von der Basisstation 103 an die mobilen Stationen 104 gesendet. Beispielsweise können von einer Verbindungseinheit 106 zur Verfügung gestellte Nutzdaten an die mobilen Stationen 104 übertragen werden. Dazu wird eine Kennung, beispielsweise die eindeutige Kennung 105, in jedes der Datenpakete 204 eingebettet, so dass ein der Kennung zugeordneter Empfänger 104 an ihn gerichtete Datenpakete 204 erkennen kann. Im Ausführungsbeispiel werden gemäß dem in Figur 2 dargestellten Übertragungsplan 200 im Zeitschlitz 202A Datenpakete an die Empfänger 104A bis 104C gesendet.

In einem Schritt 304 überwachen alle aktiven mobilen Stationen 104A bis 104E einer Funkzelle 101 des Funknetzwerkes 100 wenigstens einen der Übertragungskanäle 203 auf an sie gerichtete Datenpakete 204. Dies kann zum Beispiel durch Überwachung einer in die Datenpakete 204 eingebettete Kennung und Vergleich mit einer eindeutigen Kennung 105 der mobilen Stationen 104 durchgeführt werden.

In einer bevorzugten Ausgestaltung ist eine mobile Station 104 dazu eingerichtet, sämtliche Übertragungskanäle 203 gleichzeitig zu überwachen. Aufgrund von technischen Beschränkungen des Empfangsteils 108 und Störungen einzelner Übertragungskanäle 203 ist es jedoch auch möglich, dass nur einzelne Übertragungskanäle 203 durch eine mobile Station 104 überwacht werden.

In einem weiteren Schritt 305 wird von jeder einzelnen mobilen Station 104A bis 104E überprüft, ob während des vorausgehenden Zeitschlitzes 202 Datenpakete 204 von der Basisstation 103 an sie übertragen wurden. Im Ausführungsbeispiel trifft dies im Zeitschlitz 202A für die mobilen Stationen 104A, 104B und 104C zu, nicht jedoch für die Stationen 104D und 104E.

Wird im Schritt 305 festgestellt, dass wenigstens ein Datenpaket 204 an die mobile Stationen 104A übertragen wurden, werden die darin erhaltenen Daten in einem optionalen Schritt 306 verarbeitet. Beispielsweise können darin enthaltenen Nutzdaten entschlüsselt oder wiedergegeben werden.

In einem weiteren Schritt 307 wird dann überprüft, ob der aktuelle Zeitschlitz 202A der letzte Zeitschlitz des aktuellen Übertragungsintervalls 201 war. Ist dies nicht der Fall, wird das Verfahren im Schritt 303 mit dem nächsten Zeitschlitz 202B fortgesetzt. Andernfalls beginnt das Verfahren erneut mit Schritt 301 mit der Ermittlung von Kanaleigenschaften.

Alternativ ist es auch möglich, die Kanaleigenschaften nach jedem Zeitschlitz 202 neu zu ermitteln. Dazu können beispielsweise die in der Figur 2 schattiert dargestellten Zeitschlitze 202 verwendet werden, so dass der Übertragungsplan 200 ständig an sich ändernde Übertragungseigenschaften der Funkzelle 101 angepasst werden kann.

Wird im Schritt 305 jedoch festegestellt, dass kein Datenpaket an die mobile Station 104A übertragen wurde, wie dies beispielsweise im fünften Zeitschlitz 202E der Fall ist, wird in einem Schritt 308 ein Ruhezustand für die mobile Station 104A aktiviert. Beispielsweise kann ein Empfangsteil 108 der mobilen Station 104 deaktiviert werden.

Im Schritt 309 überprüft eine Verzögerungsschleife, ob das Ende des Übertragungsintervalls 201 erreicht wurde. Während dieser Zeit befindet sich der Empfänger 104A in einem Ruhezustand, so dass dessen Energieaufnahme verringert ist. Alternativ kann die mobile Station 104A zu dieser Zeit auch bevorzugt andere Aufgaben wie etwa eine interne Datenverarbeitung ausführen ohne weiter auf an sie übertragenen Datenpakete 204 zu achten.

Am Ende des Übertragungsintervalls 201 wird in einem Schritt 310 der Ruhezustand wieder deaktiviert. Somit steht beispielsweise das Empfangsteil 108 der mobilen Station 104A in einer darauf folgenden Messphase 205 oder Datenübertragungsphase 206 eines nachfolgenden Übertragungsintervalls 201 wieder zur Verfügung.

### Bezugszeichenliste

- 100: Funknetzwerk
- 101: Funkzelle
- 102: Kernnetzwerk
- 103: Basisstation
- 104: Mobile Station
- 105: Eindeutige Kennung
- 106: Verbindungseinheit
- 107: Übertragungsplaner
- 108: Empfangsteil
- 109: Sendeteil
- 110: Sende- und Empfangsantenne

- 200: Übertragungsplan
- 201: Übertragungsintervall
- 202: Zeitschlitz
- 203: Übertragungskanal
- 204: Datenpaket
- 205: Messphase
- 206: Datenübertragungsphase

- 300: Verfahren zum Übertragen von Daten
- 301 - 310: Verfahrensschritte

## Patentansprüche

1. Verfahren zum Übertragen von Daten in einem Übertragungsintervall (201) mit mehreren Zeitschlitzen (202) und mit mehreren Übertragungskanälen (203) an einen Empfänger (104A) eines Funknetzwerkes (100) mit einem Sender (103) und wenigstens einem weiteren Empfänger (104B) mit den Schritten:
- Senden wenigstens eines Datenpaketes (204) mit einer eingebetteten Kennung (105) auf wenigstens einem Übertragungskanal (203) in einem Zeitschlitz (202A) des Übertragungsintervalls (201) durch den Sender (103),
- Überwachen des wenigstens einen Übertragungskanals (203) durch den Empfänger (104A) auf in dem Zeitschlitz (202A) übertragene Datenpakete (204) mit darin eingebetteten, dem Empfänger (104A) zugeordneten Kennungen (105) und
- Schalten des Empfängers (104A) in einen Ruhezustand bis zum Ende des Übertragungsintervalls (201), wenn der Empfänger (104A) während des Zeitschlitzes (202) kein Datenpaket (204) mit einer darin eingebetteten, dem Empfänger (104A) zugeordneten Kennung (105A) erhalten hat.

2. Verfahren nach Anspruch 1, **dadurch gekennzeichnet, dass** die Schritte des Verfahrens für einen nachfolgenden Zeitschlitz (202) des Übertragungsintervalls (201) wiederholt werden, solange der Empfänger (104A) in einem vorherigen Zeitschlitz (202) ein Datenpaket (204) mit einer darin eingebetteten, dem Empfänger (104A) zugeordneten Kennungen (105A) erhalten hat.

3. Verfahren nach Anspruch 1 oder 2, mit dem zusätzlichen Schritt:
- Ermitteln von Kanaleigenschaften des wenigstens eines Übertragungskanals (203) in einer Messphase (205).

4. Verfahren nach Anspruch 3, **dadurch gekennzeichnet, dass** der Schritt des Ermittelns von Kanaleigenschaften, die folgenden Schritte umfasst:
- Senden eines vorbestimmten Messsignals von dem Sender (103) an den Empfänger (104A)
- Ermitteln der Empfangsqualität des Messsignals durch den Empfänger (104A) und
- Übermitteln wenigstens eines auf der ermittelten Empfangsqualität basierenden Wertes, der eine Aussage über die Kanaleigenschaften zulässt, von dem Empfänger (104A) an den Sender(103).

5. Verfahren nach Anspruch 3 oder 4, mit dem zusätzlichen Schritt:
- Ermitteln eines Übertragungsplans (200) für das Übertragungsintervall (201) basierend auf in der Messphase (205) ermittelten Kanaleigenschaften des wenigstens einen Übertragungskanals (203).

6. Verfahren nach Anspruch 5, **dadurch gekennzeichnet, dass** bei der Ermittlung des Übertragungsplans (200) vorbestimmte Anforderungen für Datenraten, Echtzeitbedingungen oder Verbindungsqualitäten des Empfängers (104A) berücksichtigt werden.

7. Mobilfunknetzwerk (100) mit mehreren Übertragungskanälen (203), die in einem Übertragungsintervall (201) in eine Vielzahl von Zeitschlitzen (202) unterteilt sind, aufweisend
- einen Sender (103) zum Übertragen von Datenpaketen (204), wobei der Sender (103) dazu eingerichtet ist, wenigstens ein Datenpaket (204) mit einer eingebetteten Kennung (105) auf wenigstens einem Übertragungskanal (203) der Vielzahl von Übertragungskanälen (203) in einem Zeitschlitz (202A) des Übertragungsintervalls (201) zu übertragen,
- einen Empfänger (104A) und wenigstens einen weiteren Empfänger (104B, 104C, 104D, 104E) zum Empfang von an sie gerichtete Datenpaketen (204), wobei die Empfänger (104A, 104B, 104C, 104D, 104E) dazu eingerichtet sind, die Übertragungskanäle (203) gleichzeitig zu überwachen, wobei der Empfänger (104A) dazu eingerichtet ist, wenigstens einen Übertragungskanal (203) auf in dem Zeitschlitz (202A) übertragene Datenpakete (204) mit darin eingebetteten, dem Empfänger (104A) zugeordneten Kennungen (105) zu überwachen, und dazu eingerichtet ist, in einen Ruhezustand bis zum Ende des Übertragungsintervalls (201) zu schalten, wenn der Empfänger (104A) während des Zeitschlitzes (202) kein Datenpaket (204) mit einer darin eingebetteten, dem Empfänger (104A) zugeordneten Kennung (105A) erhalten hat.

8. Funknetzwerk (100) nach Anspruch 7, **dadurch gekennzeichnet, dass**
- in einem ersten Zeitschlitz (202A) des Übertragungsintervalls (201) Datenpakete (204) ausschließlich an Empfänger (104A, 104B, 104C) einer ausgewählten Gruppe von Empfängern (104) übertragen werden, und
- in nachfolgenden Zeitschlitzen (202B - 2021) des Übertragungsintervalls (201) Datenpakete (204) ausschließlich an die Empfänger (104A, 104B, 104C) der ausgewählten Gruppe übertragen werden und andere Empfänger (104D, 104E) während der nachfolgenden Zeitschlitze (202B - 202I) in einen Ruhezustand geschaltet werden.

9. Funknetzwerk (100) nach einem der Ansprüche 7 oder 8, **dadurch gekennzeichnet, dass** es sich bei dem Funknetzwerk (100) um ein Orthogonal Frequency Division Multiplexing Funknetzwerk handelt.

10. Empfänger (104A) zur Verwendung in einem Funknetzwerk (100) mit einer Vielzahl von Übertragungskanälen (203), die in eine Vielzahl von Zeitschlitzen (202) in einem Übertragungsintervall (201) unterteilt sind, wobei der Empfänger einen Hochfrequenzempfangsteil und einen Signalverarbeitungsteil aufweist, wobei in einem Ruhezustand des Empfängers wenigstens der Signalverarbeitungsteil in einen Schlafzustand geschaltet werden kann, und der Empfänger (104A) dazu eingerichtet ist
- wenigstens ein Datenpaket (204) mit einer eingebetteten Kennung (105) auf wenigstens einem Übertragungskanal (203) in einem Zeitschlitz (202A) des Übertragungsintervalls (201) zu empfangen,
- den wenigstens einen Übertragungskanal (203) auf in dem Zeitschlitz (202A) übertragene Datenpakete mit darin eingebetteten, dem Empfänger (104A) zugeordneten Kennungen (105) zu überwachen und
- in einen Ruhezustand bis zum Ende des Übertragungsintervalls (201) zu schalten, wenn der Empfänger (104A) während des Zeitschlitzes (202) kein Datenpaket (204) mit einer darin eingebetteten, dem Empfänger (104A) zugeordneten Kennung (105A) erhalten hat.

11. Empfänger nach Anspruch 10, **dadurch gekennzeichnet, dass** der Empfänger (104A) einen Sendeteil (109) zur Übertragung von Daten an den Sender (103) aufweist und der Empfänger (104) dazu eingerichtet ist, kanalspezifische Empfangseigenschaften, insbesondere Datenübertragungsraten oder Rauschabstände über das Sendeteil (109) an den Sender (103) zurück zu übermitteln.

12. Empfänger nach einem der Ansprüche 10 oder 11, **dadurch gekennzeichnet, dass** der Empfänger (104) dazu eingerichtet ist, Kanaleigenschaften aus einem von dem Sender (103) übertragenen Messsignal zu ermitteln.

## Claims

1. A method of transmitting data in a transmission interval (201) with several time slots (202) and with several transmission channels (203) to a receiver (1 04A) of a radio network (100) with a transmitter (103) and at least one further receiver (104B), the method comprising the steps:
- sending at least one data packet (204) with an embedded identifier (105) on at least one transmission channel (203) in a time slot (202A) of the transmission interval (201) by the transmitter (103),
- monitoring the at least one transmission channel (203) by the receiver (104A) on data packets (204) transmitted in the time slot (202A) with identifiers (105) embedded therein and associated with the receiver (1 04A) and
- switching the receiver (104A) into an idle state until the end of the transmission interval (201), if the receiver (104A) has not received a data packet (204) with an identifier (105A) embedded therein and associated with the receiver (1 04A) during the time slot.

2. The method according to claim 1, **characterised in that** the steps of the method are repeated for a subsequent time slot (202) of the transmission interval (201) as long as the receiver (104A) has received a data packet (204) with an identifier (1 05A) embedded therein and associated with the receiver (104A) in a previous time slot (202).

3. The method according to claim 1 or 2, comprising the additional step:
- determining channel characteristics of the at least one transmission channel (203) in a measuring phase (205).

4. The method according to claim 3, **characterised in that** the step of determining channel characteristics comprises the following steps:
- sending a pre-determined measurement signal from the transmitter (103) to the receiver (104A),
- determining the reception quality of the measurement signal by the receiver (1 04A) and
- conveying at least one value based on the reception quality, which permits a statement about channel characteristics, from the receiver (104A) to the transmitter (103).

5. The method according to claim 3 or 4, comprising the additional step:
- determining a transmission plan (200) for the transmission interval (201) based on channel characteristics determined in the measuring phase (205) of the at least one transmission channel (203).

6. The method according to claim 5, **characterised in that** predetermined requirements for data rates, real time conditions or connection qualities of the receiver (1 04A) are considered during the determination of the transmission plan (200).

7. A portable radio network (100) having a plurality of transmission channels (203), which are divided into a plurality of time slots (202) in a transmission interval (201), the portable radio network comprising
- a transmitter (103) for transmitting data packets (204), wherein the transmitter (103) is adapted to transmit at least one data packet (204) with an embedded identifier (105) on at least one transmission channel (203) of the plurality of transmission channels (203) in a time slot (202A) of the transmission interval (201),
- a receiver (1 04A) and at least one further receiver (104B, 104C, 104D, 104E) for receiving data packets (204) addressed to them, wherein the receivers (104, 104B, 104C, 104D, 104E) are adapted to simultaneously monitor the transmission channels (203), wherein the receiver (1 04A) is adapted to monitor at least one transmission channel (203) on data packets (204) transmitted in the time slot (202A) with identifiers (105) embedded therein and associated with the receiver (104A), and is adapted to switch into an idle state until the end of the transmission interval (201), if the receiver (104A) has not received a data packet (204) with an identifier (1 05A) embedded therein and associated with the receiver (1 04A) during the time slot (202).

8. The radio network (100) according to claim 7, **characterised in that**
- in a first time slot (202A) of the transmission interval (201), data packets (204) are exclusively transmitted to receivers (104A, 104B, 104C) of a selected group of the plurality of receivers (104),
- in subsequent time slots (202B-2021) of the transmission interval (201), data packets (204) are exclusively transmitted to the receivers (1 04A, 104B, 104C) of the selected group and other receivers (104D, 104E) are switched into an idle state during the subsequent time slots (202B-202I).

9. The radio network (100) according to claim 7 or 8, **characterised in that** the radio network (100) is an orthogonal frequency division multiplexing radio network.

10. A receiver (1 04A) for use in a radio network (100) having a plurality of transmission channels (203), that are divided into a plurality of time slots (202) in a transmission interval (201), the receiver having a high frequency receiving section and a signal processing section, wherein in an idle state of the receiver at least the signal processing section may be switched into a sleep state, and the receiver (1 04A) is adapted
- to receive at least one data packet (204) with an embedded identifier (105) on at least one transmission channel (203) in a time slot (202A) of the transmission channel (201),
- to monitor the at least one transmission channel (203) on data packets transmitted in the time slot (202A) with identifiers (105) embedded therein and associated with the receiver (1 04A), and
- to switch into an idle state until the end of the transmission interval (201), if the receiver (104A) has not received a data packet (204) with an identifier (105A) embedded therein and associated with the receiver (104A).

11. The receiver according to claim 10, **characterised in that** the receiver (104A) has a transmitting section (109) for the transmission of data to the transmitter (103) and the receiver (104) is adapted to convey channel-specific reception characteristics, in particular data transmission rates or signal-to-noise ratios via the transmitting section (109) back to the transmitter (103).

12. The receiver according to claim 10 or 11, **characterised in that** the receiver (104) is adapted to determine channel characteristics from a measurement signal transmitted by the transmitter (103).

## Revendications

1. Procédé de transmission de données dans un intervalle de transmission (201) avec plusieurs intervalles de temps (202) et avec plusieurs canaux de transmission (203) à un récepteur (104A) d'un réseau radio (100) avec un transmetteur (103) et au moins un autre récepteur (104B), le procédé comportant:
- émettre au moins un paquet de données (204) avec un identificateur encastré (105) sur au moins un canal de transmission (203) dans un intervalle de temps (202A) de l'intervalle de transmission (201) par le transmetteur (103),
- surveiller l'au moins un canal de transmission (203) par le récepteur (1 04A) concernant des paquets de données (204) transmis dans l'intervalle de temps (202A) avec des identificateurs (105) encastrés dans ceux-ci et associés au récepteur (104A) et
- commuter le récepteur (1 04A) dans un état inactif jusqu'à la fin de l'intervalle de transmission (201), si le récepteur (104A) n'a pas reçu un paquet de données avec un identificateur encastré dans celui-ci et associé au récepteur (1 04A) pendant l'intervalle de temps.

2. Procédé selon la revendication 1, **caractérisé en ce que** les étapes du procédé sont répétées pour un intervalle de temps subséquent de l'intervalle de transmission (201) aussi longtemps que le récepteur (104A) a reçu un paquet de données (204) avec un identificateur (1 05A) encastré dans celui-ci et associé au récepteur (1 04A) dans un intervalle de temps (202) préalable.

3. Procédé selon la revendication 1 ou 2, comportant l'étape additionnelle:
- déterminer des caractéristiques de canal de l'au moins un canal de transmission (203) dans une phase de transmission (205).

4. Procédé selon la revendication 3, **caractérisé en ce que** l'étape de déterminer des caractéristiques de canal comporte les étapes suivantes:
- émettre un signal de mesure prédéterminé du transmetteur (103) au récepteur (104A),
- déterminer la qualité de réception du signal de mesure par le récepteur (104A), et
- communiquer au moins une valeur sur la base de la qualité de réception qui permet une déclaration sur des caractéristiques de canal, du récepteur (1 04A) au transmetteur (103).

5. Procédé selon la revendication 3 ou 4, comportant l'étape additionnelle:
- déterminer un plan de transmission (200) pour l'intervalle de transmission (201) sur la base des caractéristiques de canal déterminées dans la phase de mesure (205) de l'au moins un canal de transmission (203).

6. Procédé selon la revendication 5, **caractérisé en ce que** des réquisitions prédéterminées pour des données, des conditions de temps réel ou des qualités de connexion du récepteur (104A) sont prises en considération pendant la détermination du plan de transmission (200).

7. Réseau radio mobile (100) comportant une pluralité de canaux de transmission (203), qui sont divisés dans une pluralité d'intervalles de temps (202) dans un intervalle de transmission (201), le réseau radio mobile comportant
- un transmetteur (103) pour transmettre des paquets de données (204), le transmetteur étant agencé à transmettre au moins un paquet de donnée (204) avec un identificateur encastré (105) sur au moins un canal de transmission (203) de la pluralité de canaux de transmission (203) dans un intervalle de temps (202A) de l'intervalle de transmission (201),
- un récepteur (104A) et au moins un autre récepteur (104B, 104C, 104D, 104E) pour la réception des paquets de données (204) adressés à ceux-ci, lés récepteurs (104, 104B, 104C, 104D, 104E) étant agencés à surveiller simultanément les canaux de transmission (203), le récepteur (1 04A) étant agencé à surveiller au moins un canal de transmission (203) concernant des paquets de données (204) transmis dans l'intervalle de temps (202A) avec des identificateurs (205) encastrés dans ceux-ci et associés au récepteur (1 04A) et étant agencé à commuter dans un état inactif jusqu'à la fin de l'intervalle de transmission (201), si le récepteur (104A) n'a pas reçu un paquet de données (204) avec un identificateur (105A) encastré dans celui-ci et associé au récepteur (1 04A) pendant l'intervalle de temps (202).

8. Réseau radio mobile (100) selon la revendication 7, **caractérisé en ce que**
- dans un premier intervalle de temps (202A) de l'intervalle de transmission (201), des paquets de données (204) sont exclusivement transmis aux récepteurs (104A, 104B, 104C) d'un groupe sélectionné de la pluralité de récepteurs (104),
- dans des intervalles de temps subséquents (202B-2021) de l'intervalle de transmission (201), des paquets de données sont exclusivement transmis aux récepteurs (104A, 104B, 104C) du groupe sélectionné et d'autres récepteurs (104D, 104E) sont commutés dans un état inactif pendant les intervalles de temps subséquents (202B-202I).

9. Réseau radio mobile (100) selon la revendication 7 ou 8, **caractérisé en ce que** le réseau radio mobile (100) est un réseau radio mobile du type orthogonal frequency division multiplexing.

10. Récepteur (1 04A) pour l'usage dans un réseau radio (100) comportant une pluralité de canaux de transmission (203), qui sont divisés dans une pluralité d'intervalles de temps (202) dans un intervalle de transmission (201), le récepteur ayant une section de réception de haute fréquence et une section de traitement de signal, dans un état inactif du récepteur au moins la section de traitement de signal pouvant été commutant dans un état de repos, et le récepteur (1 04A) étant agencé à
- recevoir au moins un paquet de données (204) avec un identificateur encastré (105) sur au moins un canal de transmission (203) dans un intervalle de temps (202A) du canal de transmission (201),
- surveiller l'au moins un canal de transmission (203) concernant des paquets de données transmis dans l'intervalle de temps (202A) avec des identificateurs (105) encastrés dans ceux-ci et associés au récepteur (104A), et
- commuter dans un état inactif jusqu'à la fin de l'intervalle de transmission (201), si le récepteur (104A) n'a pas reçu un paquet de données (204) avec un identificateur (105) encastré dans celui-ci et associé au récepteur (104A).

11. Récepteur selon la revendication 10, **caractérisé en ce que** le récepteur (104A) a une section de transmission (109) pour la transmission de données au transmetteur (103) et le récepteur (104) est agencé à communiquer des caractéristiques spécifiques du canal, en particulier des taux de transmission de données ou des rapports signal sur bruit via la section de transmission (109) retour au transmetteur (103).

12. Récepteur selon l'une des revendications 10 ou 11, **caractérisé en ce que** le récepteur (104) est agencé à déterminer des caractéristiques de canal à partir d'un signal de mesure transmis par le transmetteur (103).
